# EUROPÄISCHE PATENTANMELDUNG

(11) **EP 0 562 137 A1**
(43) Veröffentlichungstag der Anmeldung: **29.09.1993**
(21) Anmeldenummer: 92105075.3
(22) Anmeldetag: 24.03.1992
(51) Int. Cl.: G06F 7/52

(54) **Verfahren für Datenverarbeitungsanlagen zur Division von normalisierten Operanden**

(71) Anmelder: Siemens Nixdorf Informationssysteme Aktiengesellschaft, D-33102 Paderborn (DE)
(72) Erfinder: Linz, Stefan, Dipl.-Ing., W-8000 München 80 (DE)
(74) Vertreter: Fuchs, Franz-Josef, Dr.-Ing.

(57) **Zusammenfassung**

Bei jedem Divisionsschritt wird gemäß einem Two-Bit-Lookahead-Non-Restoring-Divisionsverfahren von einer Addier-/Subtrahierschaltung (CLAD) mit vorausschauender Übertragsermittlung ein unverkürzter Teilrest (PR) über die gesamte Operandenlänge gebildet. Dabei ergibt sich ein die k Bitstellen der verkürzten Operanden (VE1 und VE2) nicht berücksichtigender Ausgangsübertrag (CYO). Darüber hinaus werden bei jedem Divisionsschritt von zwei weiteren Addier-/Subtrahierschaltungen (CLA1 und CLA2) verkürzte Teilreste (VPR1 und VPR2) entsprechend den beiden möglichen Übertragswerten (CYI=1 und CYI=0) an der niederwertigsten Bitstelle der zu addierenden bzw. subtrahierenden und auf k Bitstellen verkürzten Operanden (VE1 und VE2) ermittelt. Abhängig von den Ergebnissen für die beiden verkürzten Teilreste (VPR1 und VPR2) werden zwei Kombinationen aus Teilquotient (QU1 bzw. QU2) und Vervielfachungsfaktor (VFF1 bzw. VFF2) zur Auswertung bereitgestellt und von den jeweils bereitgestellten beiden Kombinationen (QU1,VFF1 und QU2,VFF2) in Abhängigkeit des bei der parallel durchgeführten Addition bzw. Subtraktion der unverkürzten Operanden (E1 und E2) bereitgestellten Ausgangsübertrags (CYO) die zugehörige Kombination (z.B. QU1,VFF1) ausgewählt. Die Ermittlung der Werte für den jeweiligen Teilquotieten (QU1 bzw. QU2) erfolgt anhand der Vorzeichen (OS1 und S1 bzw. OS2 und S2) des vorhergehend ermittelten Teilrests (PR) und des zuletzt ermittelten verkürzten Teilrests (VPR1 bzw. VPR2) in Verbindung mit dem dem Divisionsschritt zugrundegelegten Vervielfachungsfaktor (VFF). Die Werte für den jeweiligen Vervielfachungsfaktor (VFF1 bzw. VFF2) resultieren aus dem ermittelten verkürzten Teilrest (VPR1 bzw. VPR2) in Verbindung mit dem verkürzten Divisor (VDOR).

## Beschreibung

Die Erfindung betrifft eine Verfahren für Datenverarbeitungsanlagen zur Division von normalisierten Operanden gemäß dem Oberbegriff des Patentanspruches 1.

In Datenverarbeitungsanlagen sind zur Verarbeitung von Divisionsoperanden eigene Divisionswerke vorgesehen. Ein bekanntes Verfahren, das einem derartigen Divisionswerk zugrunde liegt, ist das vorausschauende 2-Bit-Divisionsverfahren ohne Restwertrekonstruktion (Two-Bit-Lookahead-Non-Restoring-Verfahren). Bei diesem Verfahren werden in jedem Divisionsschritt zwei Bitstellen für den Quotienten aus Dividend und Divisor bereitgestellt, wobei im ersten Divisionsschritt ein Teilrest durch Subtraktion eines Divisorvielfachen vom Dividend gebildet und in jedem weiteren Divisonsschritt abhängig vom Vorzeichen des jeweils zuletzt ermittelten Teilrests ein Divisorvielfach zu diesem Teilrest addiert oder davon subtrahiert wird.

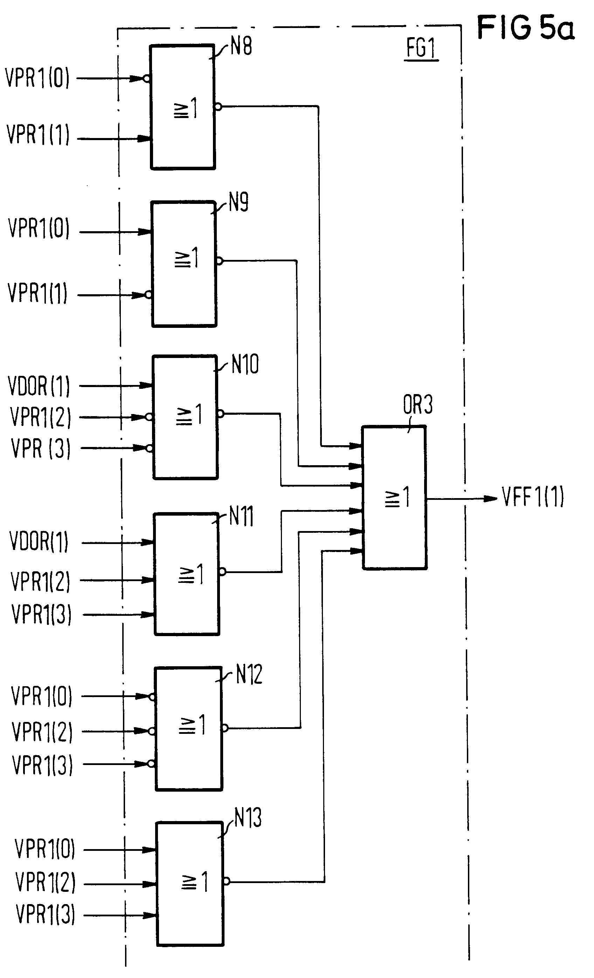

Eine Vorrichtung zur Division von Operanden, die gemäß dem Divisionsverfahren ohne Restwertrekonstruktion arbeitet, ist aus der EP-B1-0 158 530 bekannt. In jedem Divisionsschritt erfolgt eine Addition bzw. Subtraktion eines Divisorvielfachen vom jeweiligen Teilrest, wobei die oberen Bitstellen und die unteren Bitstellen der jeweiligen Operanden von jeweils einem zugehörigen Addierer parallel zueinander verarbeitet werden (siehe Figur 5). Aus der Verknüpfung der oberen Operandenbitstellen resultiert ein verkürzter Teilrest, bestehend aus einem Vorzeichen sowie einer Summen- und einer Übertragskomponente, während der Addierer über die unteren Operandenbitstellen ein Teilergebnis mit einem sich dabei ergebenden Ausgangsübertrag liefert.

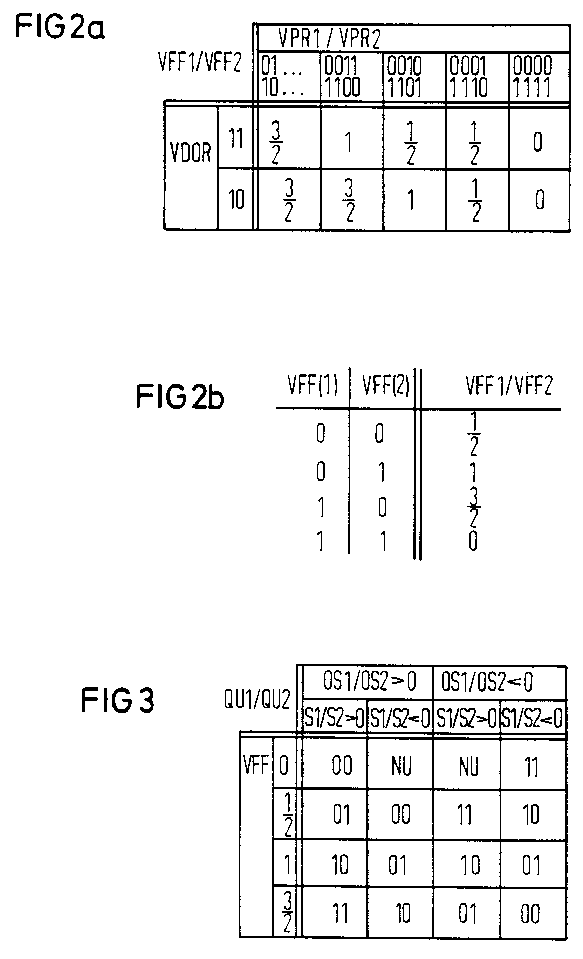

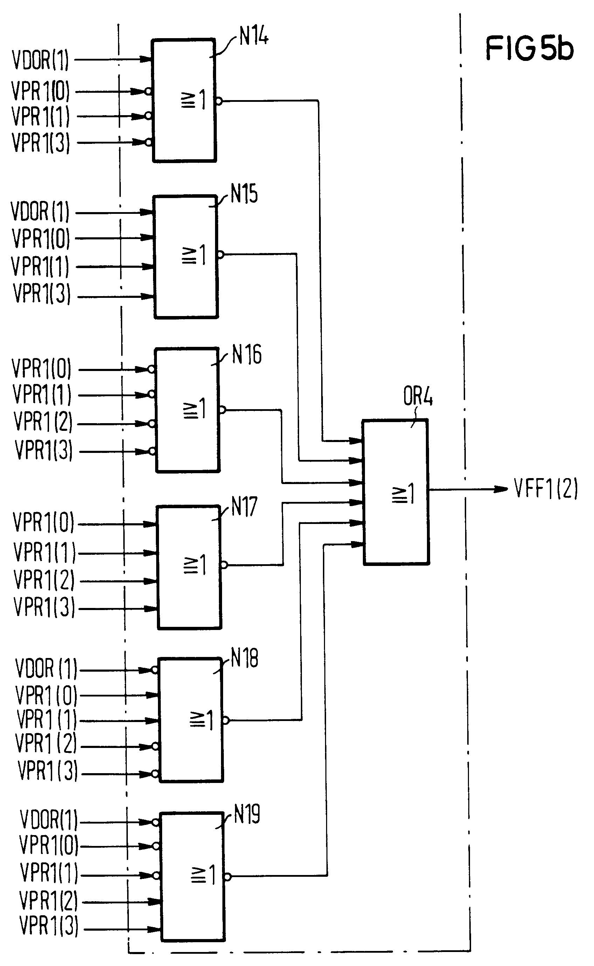

Das verkürzte, bei einem negativen Vorzeichen zu komplementierende Additionsergebnis wird parallel angeordneten Dekodierschaltungen zugeführt, die daraus jeweils eine Adresse für die Auswahl einer mehrere Divisorwerte enthaltenden Zeile in einer Vorhersagetabelle (siehe Figur 7) bilden. Die jeweils ausgelesenen Einträge einer Zeile bilden zusammen mit dem verkürzten Divisor die Eingänge einer zugehörigen Vergleichsschaltung zur Erzeugung eines die Bereitstellung des Divisorvielfachen für den nächstfolgenden Divisionsschritt steuernden Vervielfachungsfaktors (siehe Figur 3). In Abhängigkeit des aus der Verarbeitung der unteren Operandenbitstellen sich ergebenden Ausgangsübertrags wird von den beiden parallel erzeugten Vervielfachungsfaktoren ein Wert ausgewählt, der mit dem pro Divisionsschritt vorherzusagenden Teilquotienten für eine Radix-16-Division identisch ist. Die bekannte Vorrichtung weist für die Bildung des unverkürzten Teilrests pro Divisionsschritt außerdem eine zusätzliche Einrichtung zur Zusammenführung der Übertragungskomponente des verkürzten Additionsergebnisses und des Ausgangsübertrags auf.

Die für die Vorhersage des jeweiligen Vervielfachungsfaktors bzw. Teilquotienten erforderlichen Einrichtungen dienen zur Umsetzung des verkürzten Additionsergebnisses in eine Form, die für die Ansteuerung einer möglichst einfachen Vorhersagetabelle mit einer geringeren Anzahl von Einträgen geeignet ist. Der Vervielfachungsfaktor bzw. Teilquotient wird dabei nicht allein durch die Tabelle bestimmt, sondern erst durch die jeweils nachgeschaltete zusätzliche Einrichtung. Diese für die Vorhersage eines Vervielfachungsfaktors bzw. Teilquotienten notwendigen Einrichtungen führen zu Laufzeiten, die sich nachteilig auf die Verarbeitungszeit pro Divisionsschritt auswirken können.

Es ist Aufgabe der vorliegenden Erfindung, ein Two-Bit-Lookahead-Non-Restoring-Divisionsverfahren zu schaffen, das bei jedem Divisionsschritt eine möglichst schnelle Bereitstellung der jeweiligen Vervielfachungsfaktoren und Teilquotienten in Kombination mit der Ermittlung des unverkürzten Teilrests ermöglicht.

Diese Aufgabe wird erfindungsgemäß durch die Merkmale des Patenranspruches 1 gelöst.

Demnach werden bei jedem Divisionsschritt von einer Addier-/Subtrahierschaltung mit vorausschauender Übertragsermittlung der unverkürzte Teilrest jeweils über alle Bitstellen der Operanden gebildet sowie ein sich dabei ergebender Ausgangsübertrag ohne Berücksichtigung der k Bitstellen der jeweils verkürzten Operanden bereitgestellt. Die im Parallelzweig vorgesehenen beiden weiteren Addier-/Subtrahierschaltungen ermitteln zugehörige verkürzte Teilreste, die sich lediglich dadurch unterscheiden, daß an der niederwertigsten Bitstelle der zu addierenden bzw. subtrahierenden verkürzten Operanden jeweils einer der beiden möglichen Übertragswerte hinzugefügt wird.

Zwei Kombinationen aus Teilquotient und Vervielfachungsfaktor resultieren unmittelbar aus den beiden verkürzten Teilresten. Dabei tragen zur Bildung der Werte für den jeweiligen Teilquotienten die Vorzeichen des vorhergehend ermittelten Teilrests und des zuletzt ermittelten verkürzten Teilrests in Verbindung mit dem jeweils dem Divisionsschritt zugrundegelegten Vervielfachungsfaktor sowie zur Bildung der einzelnen Werte für die Vervielfachungsfaktoren das Ergebnis des jeweiligen verkürzten Teilrests in Verbindung mit dem verkürzten Divisor bei.

Aus den auf diese Weise bereitgestellten beiden Kombinationen aus Vervielfachungsfaktor und Teilquotient wird in Abhängigkeit des bei der parallel durchgeführten Addition bzw. Subtraktion der unverkürzten Operanden bereitgestellten Ausgangsübertrags die entsprechende Kombination ausgewählt.

Beim Divisonsverfahren gemäß der Erfindung können die einzelnen Werte für die jeweiligen Vervielfachungsfaktoren und Teilquotienten unmittelbar aus den ermittelten verkürzten Teilresten abgeleitet werden, ohne daß zusätzliche Maßnahmen zu deren Modifikation durchgeführt werden. Vielmehr genügt für die schnelle Bereitstellung der Teilquotienten bzw. Vervielfachungsfaktoren jeweils eine geringe Anzahl von zu berücksichtigenden Bitstellen, wobei die einzelnen Werte und die sie bestimmenden Größen beispielsweise einfachen Vorhersagetabellen mit eindeutigen Tabelleneinträgen entnommen werden.

Die Folge ist eine Verringerung der Verarbeitungszeit für die Bereitstellung der einzelnen Werte. Durch die erfindungsgemäße Kombination der für die beschleunigte Vorhersage vorgesehenen Merkmale mit dem die Auswahl bewirkenden Merkmal kann insgesamt eine im Vergleich zu bekannten Divisionseinrichtungen schnellere Bereitstellung der jeweiligen Teilquotienten und Vervielfachungsfaktoren gemeinsam mit dem jeweiligen unverkürzten Teilrest für den nächstfolgenden Divisionsschritt erreicht werden.

Gemäß einer Weiterbildung der Erfindung können die Werte für den jeweiligen Teilquotienten und den jeweiligen Vervielfachungsfaktor durch zugehörige Verknüpfungsschaltungen mit geringem Aufwand ermittelt werden, wobei gemäß einer bevorzugten Ausführungsform die Ermittlung der jeweils einander entsprechenden Werte für die Teilquotienten bzw. die Vervielfachungsfaktoren durch identische Verknüpfungsschaltungen erfolgt.

Gemäß einer anderen Weiterbildung der Erfindung kann der zur Bildung der Werte für den jeweiligen Vervielfachungsfaktor beitragende verkürzte Divisor auf eine Anzahl von Bitstellen verkürzt werden, die gegenüber der für die verkürzten Operanden vorgesehenen Anzahl nochmals verringert ist.

Einzelheiten der Erfindung werden anhand eines in der Zeichnung dargestellten Ausführungsbeispiels näher erläutert. Im einzelnen zeigen
Figur 1 ein Blockschaltbild eines nach dem erfindungsgemäßewn Divisionsverfahren arbeitenden Divisionswerkes,
Figur 2a eine Tabelle für die Bereitstellung der jeweiligen Vervielfachungsfaktoren pro Divisionsschritt,
Figur 2b eine Tabelle für die Zuordnung der möglichen Werte für den Vervielfachungsfaktor in Abhängigkeit seiner beiden pro Divisionsschritt bereitgestellten Bitstellen,
Figur 3 eine Tabelle zur Bereitstellung der jeweiligen Teilquotienten pro Divisionsschritt,
Figur 4 ein Blockschaltbild einer Verknüpfungsschaltung zur Ermittlung der Werte für den jeweiligen Teilquotienten gemäß der Tabelle in Figur 3 und
Figur 5a und Figur 5b ein Blockschaltbild einer Verknüpfungsschaltung zur Ermittlung der Werte für den jeweiligen Vervielfachungsfaktor gemäß der Tabelle in Figur 2a.

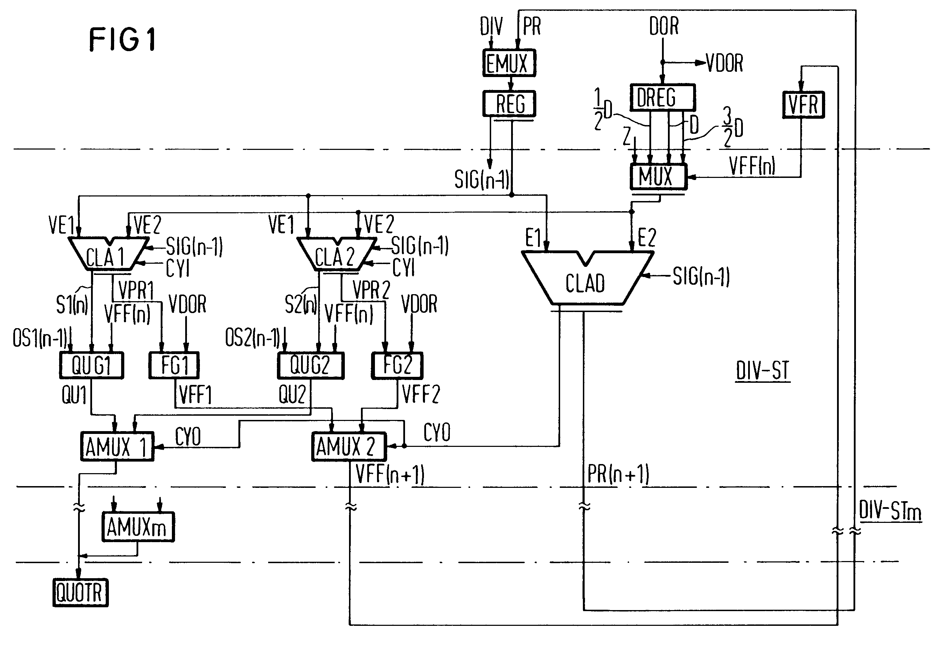

Figur 1 zeigt das Blockschaltbild eines nach dem erfindungsgemäßen "Two-Bit-Lookahead-Non-Restoring"-Divisionsverfahren arbeitendes Divisionswerkes. Dabei kann das Divisionswerk aus einer oder mehreren Divisionsstufen DIV-ST...DIV-STm aufgebaut sein, die jeweils einem Divisionsschritt entsprechend zwei Bitstellen für den Quotienten aus einem Dividenden DIV und einem Divisor DOR liefern. In einem Initialisierungsschritt vor Beginn der eigentlichen Division werden die normalisierten Operanden der Division, der Divisor DOR und der Dividend DIV, sowie ein Divisorvielfach VFF für den ersten Divisionsschritt bereitgestellt. Zu deren Speicherung sind entsprechende Eingangsregister vorgesehen, von denen das Register REG über einen Eingangsauswahlschalter EMUX den Dividend DIV bzw. einen unverkürzten Teilrest PR sowie das Register VFR den Vervielfachungsfaktor VFF aufnehmen. Darüber hinaus sind die aus dem Divisor DOR abgeleiteten Werte für die einzelnen Divisorvielfachen 1/2D, D und 3/2D in Datenregistern DREG abgelegt.

Die Divisionsstufe DIV-ST weist eingangsseitig eine Multiplexeinrichtung MUX auf, deren Dateneingänge mit den Ausgängen der Datenregister DREG und deren Steuereingänge mit den Ausgängen des Registers VFR verbunden sind. Der aus den beiden höchstwertigen Bitstellen des Dividenden DIV und des Divisors DOR im voraus abgeleitete Vervielfachungsfaktor VFF für den ersten Divisionsschritt steuert die Durchschaltung eines der an den Eingängen anliegenden Divisorvielfachen, wobei zusätzlich zu den in den Registern gespeicherten Werten für die Divisorvielfachen ein den Wert Null nachbildendes Datensignal Z der Multiplexeinrichtung MUX zugeführt ist.

An den Ausgängen des Registers REG sowie der Multiplexeinrichtung MUX ist eine Addier-/Subtrahierschaltung CLAD mit vorausschauender Übertragsermittlung in der Weise angeschlossen, daß von ihr der Inhalt des Registers REG als erster unverkürzter Operand E1 und das von der Multiplexeinrichtung MUX durchgeschaltete Divisorvielfach als zweiter unverkürzter Operand E2 miteinander zu einem unverkürzten Teilrest PR verknüpft werden. Die Art der Verknüpfung ist dabei abhängig vom Vorzeichen SIG des jeweils zuletzt ermittelten unverkürzten Teilrests PR, das bei jedem Divisionsschritt aus dem Register REG gelesen und der Schaltung CLAD zugeführt wird.

Die Addier-/Subtrahierschaltung CLAD besteht beispielsweise aus einem Carry-Lookahead-Addierer, von dem als zweiter Operand E2 bei einem negativen Vorzeichen SIG das durchgeschaltete Divisorvielfach oder bei einem positiven Vorzeichen SIG dessen Zweier-Komplement zum Operanden E1 addiert wird. Bei der Addition der unverkürzten Operanden E1 und E2 wird von der Addier-/Subtrahierschaltung CLAD ein Ausgangsübertrag CYO bereitgestellt, der sich aus der Verknüpfung der unverkürzten Operanden ohne Berücksichtigung der obersten k Bitstellen (z.B. k=4), die zu verkürzten Operanden VE1 und VE2 gehören, ergibt.

Die auf k Bitstellen verkürzten Operanden VE1 und VE2 bilden die Eingänge zweier weiterer Addier-/Subtrahierschaltungen CLA1 und CLA2, die parallel zur Schaltung CLAD angeordnet sind. In gleicher Weise ermitteln die Schaltungen CLA1 und CLA2 in Abhängigkeit des jeweils zugeführten Vorzeichens SIG zwei verkürzte Teilreste VPR1 und VPR2, wobei von der ersten Addier-/Subtrahierschaltung CLA1 einer von zwei möglichen Übertragswerten CYI, z.B. CYI=1, sowie von der zweiten Addier-/Subtrahierschaltung CLA2 der andere der beiden übertragsgswerte CYI, z.B. CYI=0, an der jeweils niederwertigsten Bitstelle der zu verarbeitenden verkürzten Operanden VE1 und VE2 addiert werden. Für den Fall, daß ein positives Vorzeichen SIG vorliegt, erfolgt entsprechend einer Subtraktion die Addition des Einer-Komplements vom jeweiligen verkürzten Operanden VE2.

Den beiden Addier-/Subtrahierschaltungen CLA1 und CLA2 sind jeweils zwei parallel angeordnete Verknüfungsschaltungen QUG1 und FG1 bzw. QUG2 und FG2 nachgeschaltet, von denen in Abhängigkeit des jeweils ermittelten verkürzten Teilrests VPR1 bzw. VPR2 eine Kombination aus Teilquotient und Vervielfachungsfaktor QU1 und VFF1 bzw. QU2 und VFF2 gebildet werden. Die Werte für die jeweiligen, einander entsprechenden Vervielfachungsfaktoren VFF1 bzw. VFF2 ergeben sich durch Verknüpfung der k Bitstellen des ermittelten verkürzten Teilrests VPR1 bzw. VPR2 mit i Bitstellen (z.B. i=2) des verkürzten Divisors VDOR.

Die Werte für die jeweiligen, einander entsprechenden Teilquotienten QU1 bzw. QU2 resultieren aus der Verknüpfung der Vorzeichen OS1 und S1 bzw. OS2 und S2 des im jeweils vorhergehenden Divisionsschritt ermittelten Teilrests PR und des im aktuellen Divisionsschritt ermittelten verkürzten Teilrests VPR1 bzw. VPR2 mit dem für den aktuellen Divisionsschritt bereitgestellten Vervielfachungsfaktor VFF. Die Vorzeichen OS1 und OS2 sind dabei mit dem im vorherigen Divisionsschritt ermittelten Vorzeichen SIG identisch und damit aus dem Eingangsregister REG auslesbar.

Von den jeweils bereitgestellten beiden Kombinationen aus Teilquotient und Vervielfachungsfaktor werden jeweils die aus zwei Bitstellen bestehenden Werte für die Teilquotienten QU1 und QU2 einem ersten Ausgangsauswahlschalter AMUX1 sowie die ebenfalls zwei Bitstellen aufweisenden Werte für die Vervielfachungsfaktoren VFF1 und VFF2 einem zweiten Ausgangsauswahlschalter AMUX2 zugeführt. Welche der beiden an den Eingängen der Auswahlschalter AMUX1 und AMUX2 anliegenden Kombinationen an die jeweiligen Ausgänge durchgeschaltet wird, ist abhängig von dem von der Addier-/Subtrahierschaltung CLAD bereitgestellten Ausgangsübertrag CYO.

Der Ausgangübertrag CYO bildet jeweils den Steuereingang beider Auswahlschalter AMUX1 und AMUX2. Liegt ein Ausgangsübertrag vor (CYO=1), erfolgt die Auswahl der abhängig vom Ergebnis des ersten verkürzten Teilrests VPR1 bereitgestellten Kombination von Teilquotient QU1 und Vervielfachungsfaktor VFF1, während für den Fall, daß kein Ausgangsübertrag festgestellt wird (CYO=0), die andere Kombination von Teilquotient QU2 und Vervielfachungsfaktor VFF2 an die jeweiligen Ausgänge der Auswahlschalter AMUX1 und AMUX2 durchgeschaltet wird.

Die von der Divisonsstufe DIV-ST gelieferten zwei Bitstellen für den Quotienten aus Dividend DIV und Divisor DOR werden in ein Quotientenregister QUOTR eingetragen. Dies gilt in gleicher Weise für nachgeschaltete Divisionsstufen DIV-STm, die einen entsprechenden Ausgangsauswahlschalter AMUXm für die Durchschaltung der beiden Quotientenbitstellen zum Quotientenregister QUOTR aufweisen. Wieviele der Divisionsstufen DIV-ST...DIV-STm nacheinander geschaltet sind, ist abhängig von der Anzahl der Divisionsschritte, die in einer Maschinenzykluszeit ausgeführt werden können. Bei einem aus zwei Divisionsstufen bestehenden Divisionswerk beispielsweise werden der zuletzt ermittelte unverkürzte Teilrest PR und der vom Auswahlschalter AMUX2 der zweiten Divisionsstufe durchgeschaltete Vervielfachungsfaktor VFF in den Eingangsregistern REG und VFR zwischengespeichert, bevor die Division mit dem nächstfolgenden Divisionsschritt entsprechend der ersten Divisionsstufe des Divisionswerks fortgeführt wird.

Zur Verdeutlichung der Zeitverhältnisse in der Divisionsstufe DIV-ST sind dem Vervielfachungsfaktor VFF, den Vorzeichen SIG bzw. OS1 und OS2 des unverkürzten Teilrests PR, den Vorzeichen S1 und S2 der jeweils ermittelten verkürzten Teilreste VPR1 und VPR2 sowie dem unverkürzten Teilrest PR die Werte n, n-1 oder n+1 hinzugefügt, die jeweils den aktuellen, den vorhergehenden oder den nächstfolgenden Divisionsschritt bezeichnen.

Figur 2a zeigt in Form einer Tabelle die Abhängigkeit der jeweiligen Vervielfachungsfaktoren VFF1 bzw. VFF2 vom jeweils zugehörigen, zuletzt ermittelten verkürzten Teilrest VPR1 bzw. VPR2 sowie vom verkürzten Divisor VDOR. Für die Bildung der verkürzten Teilreste aus den verkürzten Operanden VE1 und VE2 gemäß Figur 1 werden, wie bereits erwähnt, beispielsweise die obersten vier Bitstellen (k=4) der jeweiligen Operanden verarbeitet, so daß sich ein aus vier Bitstellen bestehendes Ergebnis zuzüglich dem jeweiligen Vorzeichen ergibt. Der verkürzte Divisor VDOR umfaßt demgegenüber eine nochmals verringerte Anzahl von beispielsweise zwei Bitstellen (i=2), von denen die erste Bitstelle wegen der Normalisierung des Divisors immer den binären Wert Eins annimmt. Die Tabelle enthält für jede Bitkombination der Eingangsgrößen einen eindeutigen Wert für den Vervielfachungsfaktor. Dabei wird zwischen den Werten 0, 1/2, 1 und 3/2 entsprechend den möglichen Divisorvielfachen Z, 1/2D, D, 3/2D gemäß Figur 1 unterschieden.

Figur 2b zeigt eine Tabelle für die Zuordnung der einzelnen Werte 0, 1/2, 1 und 3/2 für den jeweiligen Vervielfachungsfaktor VFF1 bzw. VFF2 zu dessen beiden bereitgestellten Bitstellen VFF(1) und VFF(2). Die Zuordnung erfolgt gemäß der Tabelle beispielsweise derart, daß den Bitkombinationen 00, 01, 10 und 11 die Werte 1/2, 1, 3/2 und 0 entsprechen. Dies bedeutet, daß beispielsweise bei der Bereitstellung eines Vervielfachungsfaktors VFF für den jeweils nächstfolgenden Divisionsschritt, bestehend aus den Bitstellen VFF(1)=0 und VFF(2)=1, von der Multiplexeinrichtung MUX gemäß Figur 1 das Divisorvielfach D durchgeschaltet wird.

Figur 3 zeigt eine Tabelle für die Bereitstellung der jeweiligen Teilquotienten QU1 bzw. QU2 pro Divisionsschritt in Abhängigkeit vom Vervielfachungsfaktor VFF in Verbindung mit den jeweiligen Vorzeichen S1 bzw. S2 des zuletzt ermittelten verkürzten Teilrests sowie mit dem jeweiligen Vorzeichen OS1 bzw. OS2 des im vorhergehenden Divisionsschritt ermittelten Teilrests. Die einzelnen Tabelleneinträge bestehen aus zwei Bitstellen mit Ausnahme von zwei Einträgen NU, die beim Wert 0 für den Vervielfachungsfaktor VFF nicht vorkommen können. Der jeweilige Vervielfachungsfaktor VFF1 bzw. VFF2 nimmt dabei, wie bereits erwähnt, einen der Werte 0, 1/2, 1 oder 3/2 an. Bei den jeweiligen Additionen der verkürzten oder unverkürzten Operanden entstehen positive oder negative Ergebnisse, gekennzeichnet z.B. durch OS1 > 0 oder OS1 < 0 bzw. S1 > 0 oder S1 < 0.

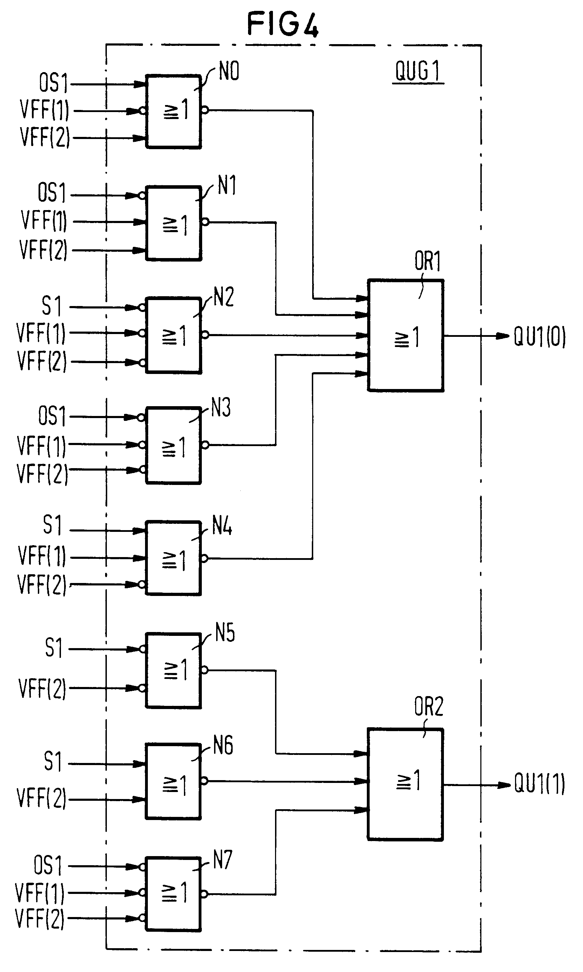

Figur 4 zeigt am Beispiel der Verknüpfungsschaltung QUG1 die Ermittlung des Teilquotienten QU1. Eine mit der Schaltung QUG1 im Aufbau identische Verknüpfungsschaltung QUG2 gemäß Figur 1 dient der Erzeugung des zugehörigen Teilquotienten QU2.

Für die Bereitstellung der beiden Teilquotientenbitstellen QU1(0) und QU1(1) sind in einer ersten Verknüpfungsstufe acht NOR-Glieder N0...N7 parallel geschaltet. Eine zweite Verknüpfungsstufe weist zwei ODER-Glieder OR1 und OR2 auf, von denen das ODER-Glied OR1 mit den NOR-Gliedern N0...N4 und das ODER-Glied OR2 mit den NOR-Gliedern N5...N7 verbunden sind. Die erste Bitstelle QU1(0) des Teilquotienten wird vom entsprechenden ODER-Glied OR1 bereitgestellt, während die zweite Bitstelle QU1(1) vom anderen ODER-Glied OR2 geliefert wird.

Die Eingangssignale der einzelnen NOR-Glieder N0...N4 werden von den beiden Bitstellen VFF(1) und VFF(2) des dem jeweiligen Divisonsschritt zugrundegelegten Vielfachungsfaktors VFF sowie dem Vorzeichen S1 des zuletzt ermittelten verkürzten Teilrests oder dem Vorzeichen OS1 des vorhergehend ermittelten unverkürzten Teilrests gebildet. Die NOR-Glieder N0, N1 und N3 weisen als Eingangssignale das Vorzeichen OS1 und die beiden Bitstellen VFF(1) und VFF(2) auf, wobei beim NOR-Glied N0 das Signal VFF(1), beim NOR-Glied N1 das Signal OS1 und beim NOR-Glied N3 alle Signale OS1, VFF(1) und VFF(2) auf jeweils einen invertierten Eingang geführt sind, während die restlichen Signale jeweils nicht invertiert verknüpft werden.

Von den NOR-Gliedern N2 und N4 werden jeweils die beiden Bitstellen VFF(1) und VFF(2) sowie das Vorzeichen S1 verarbeitet, wobei alle Eingänge des NOR-Glieds N2 und der das Signal VFF(2) führende Eingang des NOR-Glieds N4 invertiert sind.

Die zweite Bitstelle VFF(2) des Vervielfachungsfaktors VFF sowie das Vorzeichen S1 des zuletzt ermittelten verkürzten Teilrests bilden die Eingangssignale der NOR-Glieder N5 und N6. Beim einen der beiden NOR-Glieder, z.B. N5, werden die beiden Eingangssignale invertiert, während sie beim anderen der beiden NOR-Glieder, z.B. N6, unverändert bleiben. Das NOR-Glied N7 verknüpft die Signale OS1, VFF(1) und VFF(2), die alle auf invertierte Eingänge geführt sind.

Die Figuren 5a und 5b zeigen am Beispiel der Verknüpfungsschaltung FG1 die Ermittlung des Vervielfachungsfaktors VFF1 mit den beiden Bitstellen VFF1(1) und VFF1(2). Die Verknüpfungsschaltung FG2 zur Ermittlung des zugehörigen Vervielfachungsfaktors VFF2 gemäß Figur 1 mit den entsprechenden Bitstellen weist denselben Aufbau wie die in Figur 5 gezeigte Schaltung FG1 auf. Diese Schaltung FG1 besteht aus zwölf parallel geschalteten NOR-Gliedern N8...N19, von denen die ersten sechs NOR-Glieder N8...N13 an ein nachgeschaltetes ODER-Glied OR3 für die Bereitstellung der Bitstelle VFF1(1) und die zweiten sechs NOR-Glieder N14... N19 an ein nachgeschaltetes ODER-Glied OR4 für die Bereitstellung der Bitstelle VFF1(2) angeschlossen sind.

Durch die NOR-Glieder N8 und N9 werden jeweils die beiden ersten Bitstellen VPR1(0) und VPR1(1) des ermittelten verkürzten Teilrests zueinander in Beziehung gesetzt, wobei jeweils der eine der beiden Eingänge nicht invertiert und der andere invertiert ist. Die NOR-Glieder N10 und N11 weisen als Eingangssignale jeweils die zweite Bitstelle VDOR(1) des verkürzten Divisors und die beiden letzten Bitstellen VPR1(2) und VPR1(3) des ermittelten verkürzten Teilrests auf. Die erste Bitstelle des verkürzten Divisors wird nicht berücksichtigt, da sie bei Verwendung normalisierter Operanden immer den binären Wert Eins annimmt. Bei der Verknüpfung durch das NOR-Glied N10 bzw. das NOR-Glied N11 werden die Signale VPR1(2) und VPR1(3) zuvor invertiert bzw. nicht invertiert.

Die NOR-Glieder N12 und N13 verknüpfen jeweils die erste Bitstelle VPR1(0) sowie die beiden letzten Bitstellen VPR1(2) und VPR1(3) des ermittelten verkürzten Teilrests, wobei alle Signale bei einem der beiden NOR-Glieder, z.B. N12, auf invertierte Eingänge geführt sind.

Die NOR-Glieder N14 und N15 weisen jeweils als erstes Eingangssignal die zweite Bitstelle VDOR(1) des verkürzten Divisors sowie als weitere Eingangssignale die ersten beiden Bitstellen VPR1(0) und VPR1(1) sowie die letzte Bitstelle VPR1(3) des ermittelten verkürzten Teilrests auf. Dabei werden die letztgenannten Signale durch das eine der beiden NOR-Glieder, z.B. N14, invertiert und durch das andere der beiden NOR-Glieder, z.B. N15, nicht invertiert zueinander in Beziehung gesetzt. Die Eingangssignale der NOR-Glieder N16 und N17 werden jeweils von allen vier Bitstellen VPR1(0)...VPR1(3) des ermittelten verkürzten Teilrests gebildet und beispielsweise an den Eingängen eines der beiden NOR-Glieder, z.B. N16, invertiert.

Die NOR-Glieder N18 und N19 weisen jeweils die vier Bitstellen VPR1(0)...VPR1(3) des ermittelten verkürzten Teilrests zuzuglich der zweiten Bitstellen VDOR(1) vom verkürzten Divisor als Eingangssignale auf. Dabei werden vor der Verknüpfung durch das eine NOR-Glied, z.B. N18, das Signal VDOR(1) sowie die beiden letzten Bitstellen VPR1(2) und VPR1(3) und vor der Verknüpfung durch das andere NOR-Glied, z.B. N19, das Signal VDOR(1) und die beiden ersten Bitstellen VPR1(0) und VPR1(1) invertiert.

Die in den Figuren 4 sowie 5a und 5b dargestellten Verknüpfungsschaltungen QUG1 und FG1 weisen jeweils einen zweistufigen Aufbau mit einfachen Verknüpfungsgliedern auf, so daß die Laufzeiten für die Bereitstellung der Werte für die Teilquotienten und Vervielfachungsfaktoren gegenüber bekannten Vorhersageeinrichtungen verringert werden können.

## Patentansprüche

1. Verfahren für Datenverarbeitungsanlagen zur Division von normalisierten Operanden, bei dem in jedem Divisionsschritt zwei Bitstellen für den Quotienten aus Dividend (DIV) und Divisor (DOR) bereitgestellt werden, wobei im ersten Divisionsschritt ein Teilrest durch Subtraktion eines Divisorvielfachen vom Dividend gebildet und in jedem weiteren Divisionsschritt abhängig vom Vorzeichen (SIG) des jeweils zuletzt erzielten Teilrests ein Divisorvielfach zu diesem Teilrest addiert oder davon subtrahier wird (Two-Bit-Lookahead-Non-Restoring-Verfahren), und bei dem in jedem Divisionsschritt ein verkürzter Teilrest durch entsprechende Addition bzw. Subtraktion der auf k Bitstellen jeweils verkürzten Operanden (VE1 und VE2) gebildet, sowie ein das pro Divisionsschritt zu addierende bzw. subtrahierende Divisorvielfach festlegender Vervielfachungsfaktor (VFF) im voraus in Abhängigkeit vom zuletzt ermittelten verkürzten Teilrest und dem verkürzten Divisor (VDOR) bereitgestellt werden, **gekennzeichnet durch**
die Kombination folgender Merkmale:
- bei jedem Divisionsschritt werden von einer Addier-/Subtrahierschaltung (CLAD) mit vorausschauender Übertragsermittlung ein unverkürzter Teilrest (PR) über die gesamte Operandenlänge gebildet sowie ein sich dabei ergebender, die k Bitstellen der verkürzten Operanden (VE1 und VE2) nicht berücksichtigender Ausgangsübertrag (CYO) bereitgestellt,
- bei jedem Divisionsschritt werden außerdem von zwei weiteren Addier-/Subtrahierschaltungen (CLA1 und CLA2) verkürzte Teilreste (VPR1 und VPR2) entsprechend den beiden möglichen Übertragswerten (CYI=1 und CYI=0) an der niederwertigsten Bitstelle der zu addierenden bzw. subtrahierenden und auf k Bitstellen verkürzten Operanden (VE1 und VE2) ermittelt,
- abhängig von den Ergebnissen für die beiden verkürzten Teilreste (VPR1 und VPR2) werden zwei Kombinationen aus Teilquotient (QU1 bzw. QU2) und Vervielfachungsfaktor (VFF1 bzw. VFF2) zur Auswertung bereitgestellt, wobei die Werte für den jeweiligen Teilquotienten (QU1 bzw. QU2) anhand der Vorzeichen (OS1 und S1 bzw. OS2 und S2) des vorhergehend ermittelten Teilrests (PR) und des zuletzt ermittelten verkürzten Teilrests (VPR1 bzw. VPR2) in Verbindung mit dem dem Divisionsschritt zugrundegelegten Vervielfachungsfaktor (VFF) sowie die Werte für den jeweiligen Vervielfachungsfaktor (VFF1 bzw. VFF2) anhand des ermittelten verkürzten Teilrests (VPR1 bzw. VPR2) in Verbindung mit dem verkürzten Divisor (VDOR) erzeugt werden, und
- von den jeweils bereitgestellten beiden Kombinationen (QU1, VFF1 und QU2, VFF2) aus Vervielfachungsfaktor und Teilquotient wird in Abhängigkeit des bei der parallel durchgeführten Addition bzw. Subtraktion der unverkürzten Operanden (E1 und E2) bereitgestellten Ausgangsübertrags (CYO) die zugehörige Kombination (z.B. QU1,VFF1) von Vervielfachungsfaktor und Teilquotient ausgewählt.

2. Verfahren nach Anspruch 1, **dadurch gekennzeichnet,** daß die jeder Kombination zugrundeliegenden Werte für den jeweiligen Teilquotienten (z.B. QU1) und den jeweiligen Vervielfachungsfaktor (z.B. VFF1) durch zugehörige Verknüpfungsschaltungen (z.B. QUG1 und FG1) zur Nachbildung von Tabellen ermittelt werden.

3. Verfahren nach Anspruch 1 oder 2, **dadurch gekennzeichnet,** daß für die Ermittlung der jeweils einander entsprechenden Werte für die Teilquotienten (QU1 und QU2) bzw. die Vervielfachungsfaktoren (VFF1 und VFF2) identische Verknüpfungsschaltungen (QUG1,QUG2 bzw. FG1, FG2) verwendet werden.

4. Verfahren nach einem der Ansprüche 1 bis 3, **dadurch gekennzeichnet,** daß der zur Erzeugung der Werte für den jeweiligen Vervielfachungsfaktor (z.B. VFF1) beitragende verkürzte Divisor (VDOR) im Vergleich zu den auf k Bitstellen verkürzten Operanden (VE1 und VE2) eine verringerte Anzahl von i Bitstellen aufweist.
